# EUROPEAN PATENT SPECIFICATION

(11) **EP 1 666 236 B1**
(45) Date of publication and mention of the grant of the patent: **24.10.2012**
(21) Application number: 05025032.3
(22) Date of filing: 16.11.2005
(51) Int. Cl.: B29D 30/72, B29D 30/16, B29D 30/30, B60C 13/00

(54) **Pneumatic tire**
Luftreifen
Pneumatique

(30) Priority: 02.12.2004 JP 2004350116
(43) Date of publication of application: 07.06.2006
(73) Proprietor: SUMITOMO RUBBER INDUSTRIES, LTD., Kobe-shi, Hyogo-ken (JP)
(72) Inventor: Miki, Youjiro c/o Sumitomo Rubber Industries, Ltd., Kobe-shi, Hyogo-ken (JP)
(74) Representative: Manitz, Finsterwald & Partner GbR

(56) References cited:
- EP-A- 1 142 695
- EP-A- 1 201 414
- EP-A- 1 564 030
- WO-A-03/101712

## Description

### BACKGROUND OF THE INVENTION

### Field of the Invention

The present invention relates to a pneumatic tire in which a sidewall rubber is formed of a winding body around which a rubber strip is wound in a circumferential direction of the tire.

### Description of the Related Art

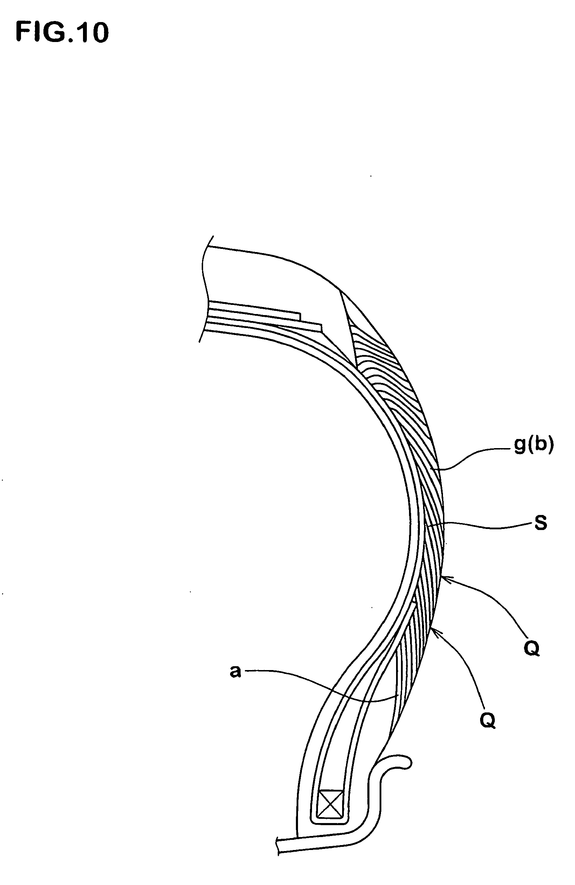

In recent years, it is proposed to form various rubber materials (g) such as tread rubber, sidewall rubber and inner liner rubber by using a winding body (b) formed by winding a ribbon-like unvulcanized rubber strip (a) spirally in the circumferential direction as schematically shown Fig. 10. In Fig. 10, the rubber material (g) is a sidewall rubber.

Since it is unnecessary to use a large rubber extruder in forming the rubber materials (b) in this method, equipment in a factory can be reduced in size. Further, nozzle exchanging operation of the rubber extruder, and adjusting operation of the rubber extruder which were necessary whenever the kind of the tire is changed become unnecessary, and in a tire industry where many kinds of tires but a small number of tires are produced, this winding method has a great merit.

However, in the rubber material (g) formed by this winding method, strength of a superposed portion (S) between adjacent rubber strips (a) is deteriorated even after the vulcanization and formation, and the superposed portion (S) is exposed to the outer surface of the rubber material (g). As a result, in the rubber material (g) having large surface distortion when the tire is deformed like the sidewall rubber, there is a problem that a crack is prone to be generated from an exposed point (Q) of the superposed portion, and the durability of the tire is deteriorated. As the superposed width of the adjacent rubber strips (a) is great, the number of exposed points (Q) to be formed is increased and thus, the crack is generated more seriously.

EP-A-1 564 030 which is prior art only pursuant to Article 54(3) and (4) EPC discloses a pneumatic tire having a side wall rubber formed of a winding body formed by winding a tape-like rubber strip. The winding body comprises an inner rubber layer and an outer rubber layer having the same direction of winding. Further pneumatic tires are disclosed by EP-A-1 142 695, EP-A-1 201 414 and WO 03/101712 A.

### SUMMARY OF THE INVENTION

Hence, it is an object of the present invention to provide a pneumatic tire capable of effectively suppressing the generation of a crack in an outer surface of a sidewall while exhibiting the merit of the winding method.

This object is achieved according to the invention by a pneumatic tire having the features of claim 1. Particular embodiments of the invention are the subject of the dependent claims.

In this manner, the winding body forming the sidewall rubber is formed of the inner rubber layer having large superposed width of the rubber strip and the outer rubber layer having small superposed width, the winding direction of the rubber strip in the inner rubber layer and the winding direction of the rubber strip in the outer rubber layer are defined. Thus, it is possible to effectively suppress the generation of a crack in the outer surface of the sidewall.

### BRIEF DESCRIPTION OF THE DRAWINGS

Fig. 1 is a sectional view showing an embodiment of a pneumatic tire of the present invention;
Fig. 2 is a sectional view showing a rubber strip used for the tire;
Fig. 3 is a schematic sectional view showing a forming state of an inner rubber layer;
Fig. 4 is a schematic sectional view showing a forming state of an outer rubber layer;
Figs. 5 are sectional views for explaining a forming method of a raw tire in an SOT structure;
Fig. 6 is a perspective view for explaining a sidewall rubber deformed by winding;
Fig. 7 is a schematic sectional view showing a winding direction of the rubber strip on a former;
Fig. 8(A) is a sectional view for explaining a forming method of a raw tire in a TOS structure, and Fig. 8 (B) is a schematic sectional view showing a winding direction of the rubber strip on the former at that time;
Fig. 9 is a distribution diagram of tension distortion generated in a sidewall outer surface; and
Fig. 10 is a sectional view for explaining a problem of a conventional technique.

### DETAILED DESCRIPTION OF THE PREFERRED EMBODIMENTS

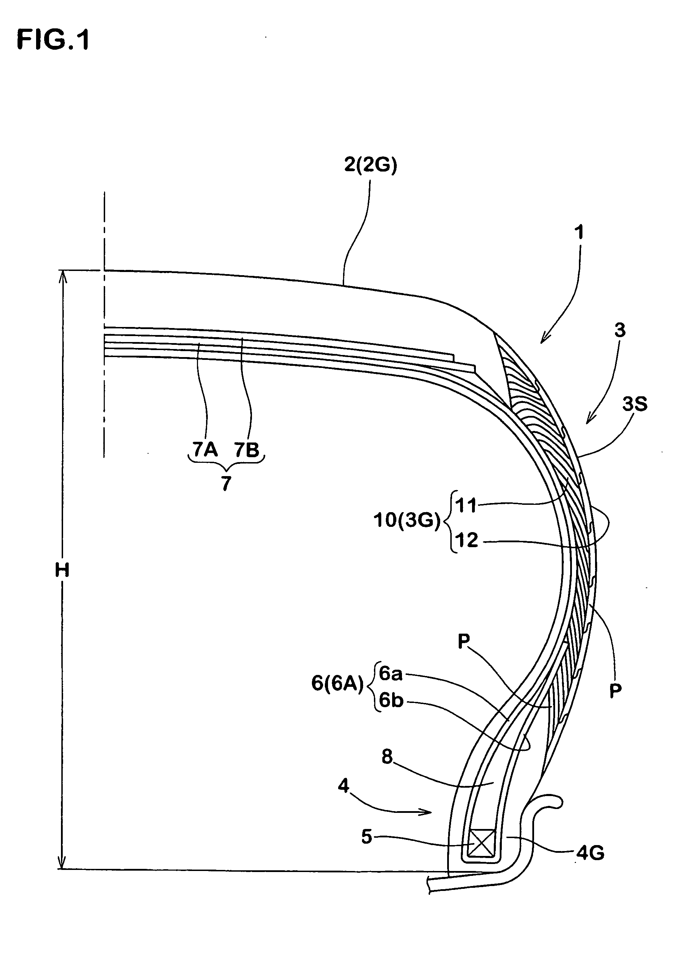

An embodiment of the present invention will be explained with illustrated examples. Fig. 1 is a sectional view when a pneumatic tire of the invention is a radial tire for a passenger vehicle.

In Fig. 1, a pneumatic tire 1 includes a carcass 6 extending from a tread portion 2 to a bead core 5 of a bead portion 4 through a sidewall portion 3, and a belt layer 7 existing radially outward of the carcass 6 and inward of the tread portion 2.

The carcass 6 is formed of one or more (one, in this example) carcass ply 6A in which carcass cords are arranged at an angle of, for example, 70° to 90° with respect to the circumferential direction of the tire. The carcass ply 6A is continuously provided with a turnup portion 6b which is turned up and around the bead core 5 from inside to outside in the axial direction of the tire and secured on each side of a ply main body 6a extending between the bead cores 5 and 5. A bead-reinforcing bead apex rubber 8 is disposed between the ply main body 6a and the turnup portion 6b. The bead apex rubber 8 extends radially outward from the bead core 5.

The belt layer 7 comprises a plurality of (two, in this example) belt plies 7A and 7B in which belt cords are arranged at an angle of, for example, 10 to 35° with respect to the circumferential direction of the tire. The belt cords intersect with each other between the plies. With this, the belt rigidity is enhanced, and the tread portion 2 is strongly reinforced with hoop effect.

In this invention, a sidewall rubber 3G forming the sidewall portion 3 is formed of a winding body 10 around which a ribbon-like rubber strip P is spirally wound in the circumferential direction. The winding body 10 comprises an inner rubber layer 11 disposed inward in the axial direction of the tire, and an outer rubber layer 12 forming an outer surface 3S of the sidewall portion 3. The outer rubber layer 12 covers the inner rubber layer 11.

In this example, an outer end of the sidewall rubber 3G in the radial direction is of a so-called SOT (sidewall over tread) structure which covers an outer end of the tread rubber 2G in the axial direction of the tire forming the tread portion 2. Alternatively, the outer end of the sidewall rubber 3G in the radial direction may be of a so-called TOS (tread over sidewall) structure which is covered with the outer end of the tread portion 2 in the axial direction of the tire.

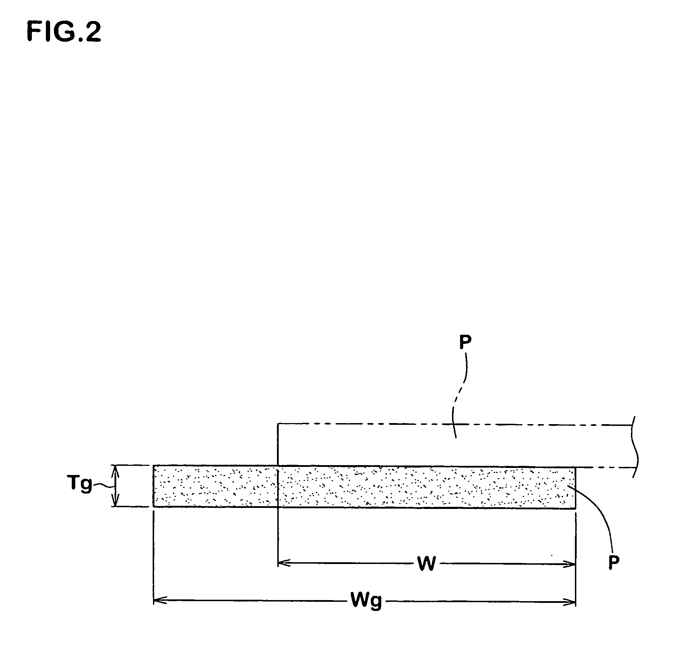

As shown in Fig. 2 in the enlarged scale, the rubber strip P is thin and narrow strip having strip width Wg of 5 to 50 mm, and strip thickness Tg of 0.5 to 3.0 mm. If the strip width Wg is less than 5 mm, the number of windings required when forming the winding body 10 is increased, and the operability is deteriorated. If the strip width Wg exceeds 50 mm, it becomes difficult to obtain a desired shape. If the strip thickness Tg is less than 0.5 mm, the thickness is too thin and the strip may be cut and the winding operation becomes difficult during the winding operation. If the strip thickness Tg exceeds 3.0 mm, the projections and depressions of the sawtooth waveform generated on the outer surface of the winding body 10 become excessively large. The projections and depressions remain as flaws due to shortage of rubber flow at the time of vulcanization formation, and this may be a cause of a crack.

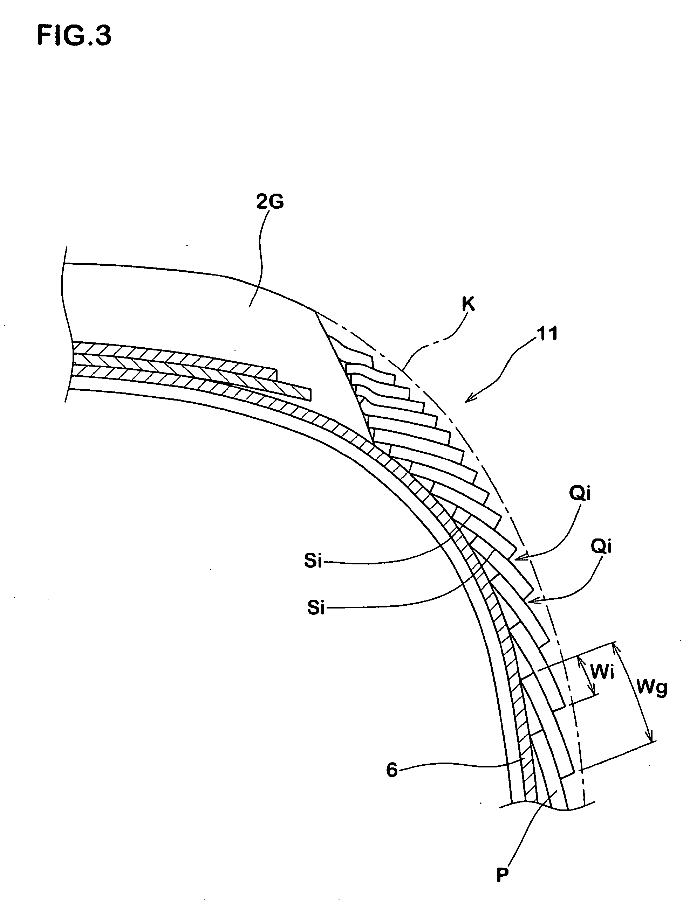

Next, as schematically shown in Fig. 3, the inner rubber layer 11 of the winding body 10 is formed by spirally winding the rubber strip P such that the superposed portion having a width Wi of 30 to 90% of the strip width Wg is formed. At that time, it is important that the winding direction of the rubber strip P is in the direction in which the rubber strip P is sequentially wound from the bead portion 4 toward the tread portion 2 in the state of the tire. That is, it is important that an outer edge of the first wound rubber strip P in the radial direction is covered with a next rubber strip P.

The inner rubber layer 11 forms a main portion of the winding body 10. Thus, in order to form the winding body 10 into a shape close to a desired finished cross section K, the inner rubber layer 11 is also formed into a shape having a profile corresponding to the finished cross section. Therefore, in the inner rubber layer 11, in order to form the inner rubber layer 11 into the profile shape corresponding to the finished cross section shape, the rubber strip P is wound while appropriately changing the superposed width Wi in the range of 30 to 90%. If the superposed width Wi is out of the range of 30 to 90% of the strip width Wg, it becomes difficult to obtain a desired profile shape, and there is a tendency that the shaping precision is deteriorated.

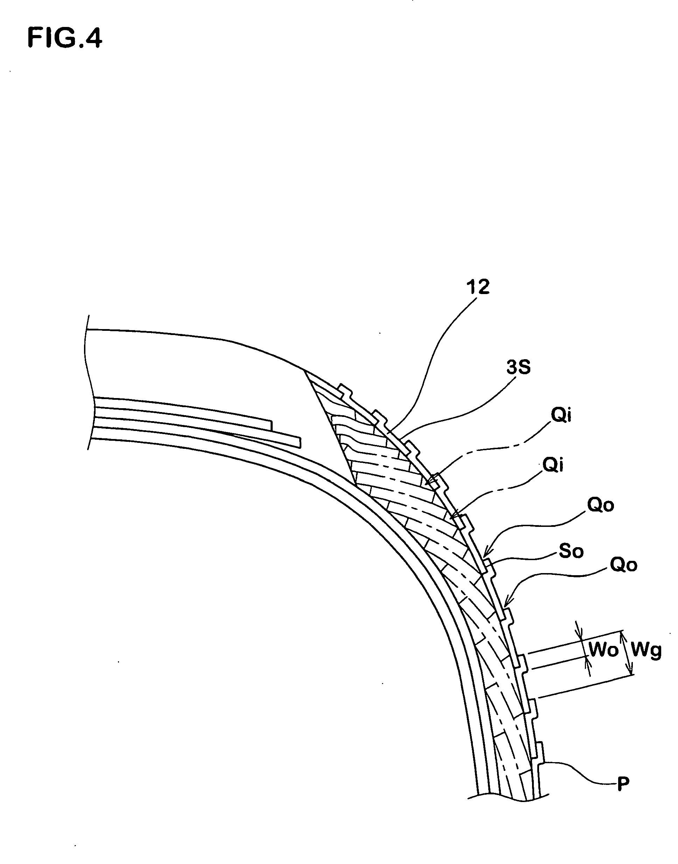

On the other hand, the outer rubber layer 12 is a covering layer for covering the outer surface of the inner rubber layer 11, and it is preferable that the outer rubber layer 12 is formed into a sheet-like form having substantially constant thickness. Thus, as schematically shown in Fig. 4, in the outer rubber layer 12, the rubber strip P is wound while having a superposed portion of a width Wo of 20% or less of the strip width Wg. With this, the outer rubber layer 12 is formed as a covering layer of thin sheet having substantially constant thickness. It is important that a winding direction of the rubber strip P at that time is opposite from that of the inner rubber layer 11, i.e. , the rubber strip P is wound from the tread portion 2 toward the bead portion 4 in the state of the tire. That is, it is important that the inner edge of the rubber strip P in the radial direction is wound in a direction where the edge is covered with the next rubber strip P.

The outer rubber layer 12 covers the outer surface of the inner rubber layer 11 in this manner. Thus, it is possible to cover and protect the exposed point Qi of the superposed portion Si of the rubber strip, and to prevent a crack from being generated from the exposed point Qi. In the outer rubber layer 12 itself, its superposed width Wo is small. Thus, it is possible to largely reduce the number of formed exposed points Qo of the superposed portion So of the rubber strip. Thus, it is possible to largely reduce the generation frequency of crack caused from the exposed point Qo. If the superposed width Wo exceeds 20% of the strip width Wg, the reducing effect of the crack generation is insufficient. The lower limit value of the superposed width Wo is 1.0 mm or more, and more preferably 2.0 mm or more. If the superposed width Wo is less than 1.0 mm, there is an adverse possibility that the superposed portion comes out due to stretch at the time of vulcanization and formation.

In the present invention, the winding direction of the rubber strip P is specified such that the inner rubber layer 11 is wound from the bead portion 4 toward the tread portion 2, and the outer rubber layer 12 is wound from the tread portion 2 toward the bead portion 4. With this, the reducing effect of the crack generation can further be enhanced due to the following reason.

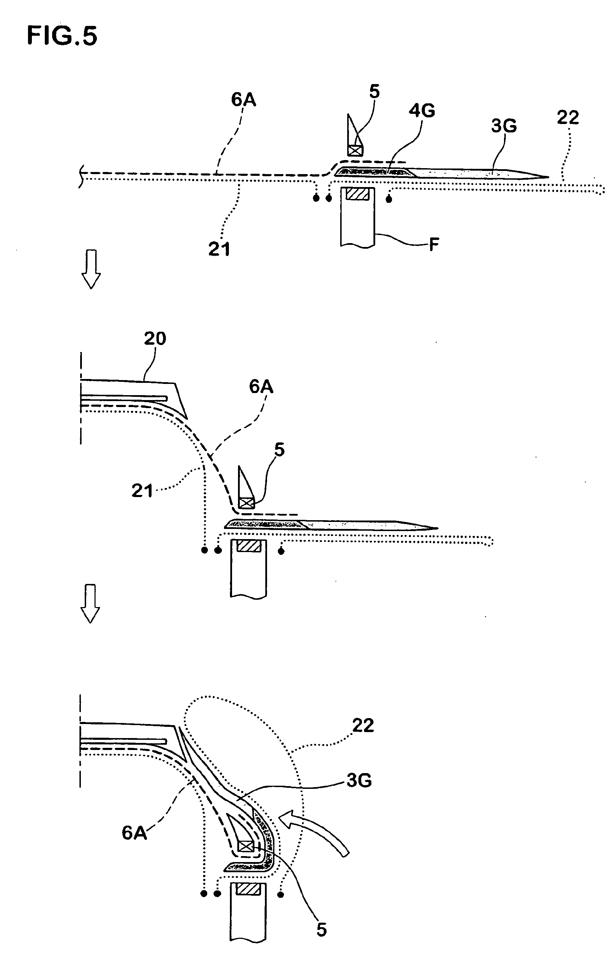

In the case of the SOT structure, as schematically shown in Figs. 5, the sidewall rubber 3G and the carcass ply 6A are sequentially formed into cylindrical shapes on a former F when a raw tire is formed. After the bead cores 5 are set to both ends of the carcass ply 6A, the carcass ply 6A is expanded (shaped) into toroidal shape between the bead cores 5 and 5. Then the toroidal carcass ply 6A is pushed against a tread ring 20 (including the tread rubber 2g and the belt layer 7) which is prepared separately, thereby integrally coupling these members. Then, the sidewall rubber 3G is wound around the bead core 5 together with the both ends of the carcass ply 6A, the sidewall rubber 3G is pushed against and adhered to the side surface of the toroidal carcass ply 6A. With this, an unvulcanized raw tire is formed. A symbol 4G in the drawing represents a clinch rubber forming an outer film of the bead portion 4, and symbols 21 and 22 represent bladders disposed in the former F.

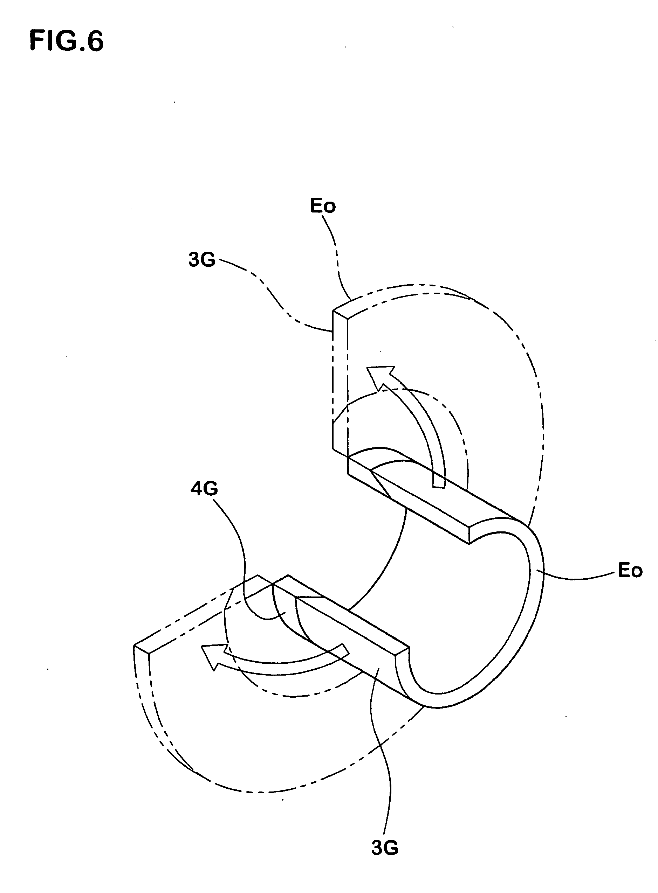

As schematically shown in Fig. 6, the sidewall rubber 3G is deformed from the cylindrical shape to a disk shape when it is wound around the bead core 5. At that time, in an outer end Eo (outer end Eo of the disk shape in the radial direction) of the cylindrical body in the axial direction of the former, the cylindrical body receives strong tension in the circumferential direction. Thus, when the sidewall rubber 3G is made of the winding body 10 of the rubber strip P, positional deviation is generated in the portion of the rubber strip P of the outer end Eo, and winding disturbance or adhesion failure is generated in the rubber strip.

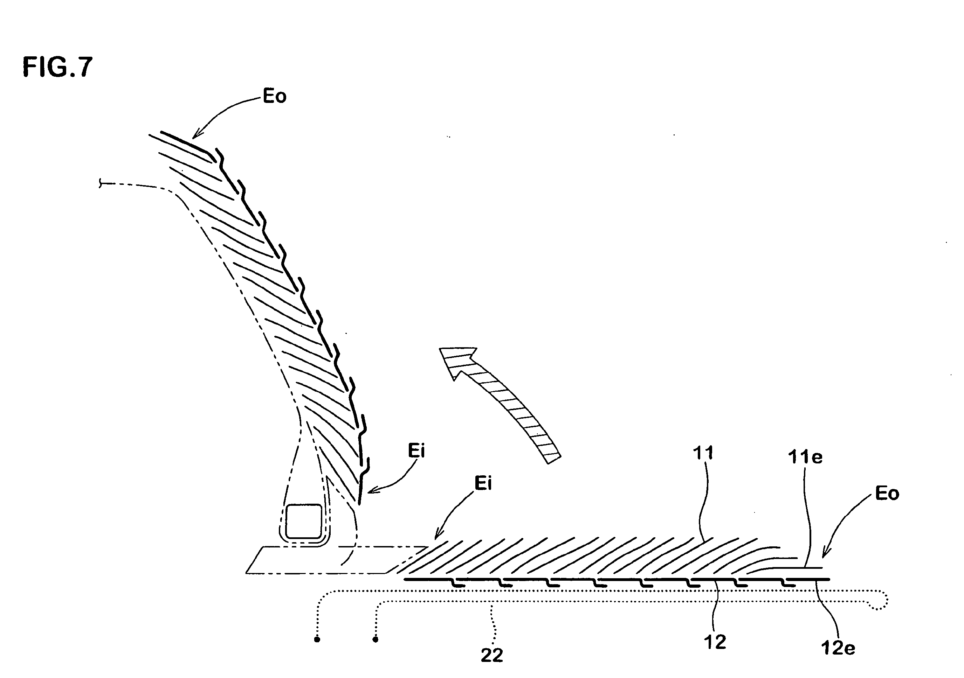

According to the present invention, however, the winding direction of the rubber strip P is specified such that the inner rubber layer 11 is wound from the bead portion 4 toward the tread portion 2, and the outer rubber layer 12 is wound from the tread portion 2 toward the bead portion 4. This winding direction of the rubber strip P is specified as schematically shown in Fig. 7 on the former F such that the inner rubber layer 11 is wound from the outer end Eo toward the inner end Ei, and the outer rubber layer 12 is wound from the inner end Ei toward the outer end Eo. In this embodiment, second, third ... winding portions are sequentially superposed on a winding-starting end 11e of the rubber strip P of the inner rubber layer 11 which becomes the outer end Eo, and the outer end Eo is pushed between the winding portions and the bladder 22 and its motion is strongly restrained. A winding-finishing end 12e of the rubber strip P of the outer rubber layer 12 which becomes the outer end Eo is pushed between the inner rubber layer 11 and the bladder 22 and its motion is strongly restrained. As a result, the winding disturbance and adhesion failure of the rubber strip P when it is wound can effectively be suppressed.

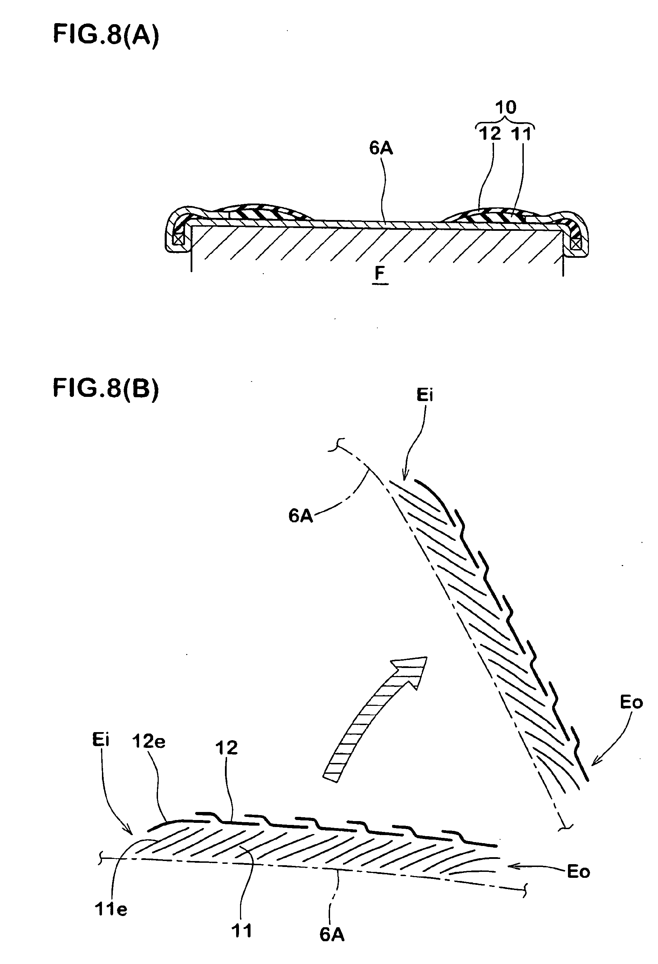

In the case of the TOS structure as shown in Fig. 8(A) for example, the winding body 10 is formed on the outer side of the cylindrical carcass ply 6A wound around the former F in the order of the inner rubber layer 11 and the outer rubber layer 12. Then, the winding body 10 is expanded in the toroidal shape and the tread ring 20 is adhered to the carcass ply 6A. In this case also, the winding direction of the rubber strip P on the former F is specified such that the inner rubber layer 11 is wound from the outer end Eo toward the inner end Ei in the axial direction of the former, and the outer rubber layer 12 is wound from the inner end Ei toward the outer end Eo. In this case, when the winding body 10 is expanded into the toroidal shape, it receives strong tension in the circumferential direction in the inner end Ei, but the winding-starting end 11e of the rubber strip P of the inner rubber layer 11 which becomes the inner end Ei is pushed between the outer rubber layer 12 and the carcass ply 6A and its motion is strongly restrained. The second and subsequent winding portions are sequentially superposed on the winding-finishing end 12e of the outer rubber layer 12 which becomes the inner end Ei, and its motion is strongly suppressed. Thus, in the case of the TOS structure, like the SOT structure, the winding disturbance and adhesion failure of the rubber strip P can effectively be suppressed.

According to the present invention, in any of the SOT structure and TOS structure, the winding directions of the inner rubber layer 11 and the outer rubber layer 12 are opposite from each other. Therefore, the rubber strip P of the inner rubber layer 11 and the rubber strip P of the outer rubber layer 12 intersect with each other, and the superposed portions Si and So are reinforced by each other. An inner edge of the rubber strip P in the radial direction is lower tension as compared with the outer edge thereof in the radial direction, and the inner edge is prone to be loosened and thus, this portion is prone to become a weak portion. According to the present invention, however, the inner edge of the rubber strip P of the outer rubber layer 12 is sequentially pushed against the outer edge of the next rubber strip P and is protected. Thus, by the synergism thereof, it is expected that the crack suppressing effect is further enhanced.

Next, in the sidewall rubber 3G, the rubber hardness Hsi of the inner rubber layer 11 after the vulcanization and formation is higher than the rubber hardness Hso of the outer rubber layer 12, and it is preferable that Hsi is greater than Hso. This is because that if the rubber hardness Hsi of the inner rubber layer 11 is greater, the tire rigidity is enhanced. With this, the deformation amount of the sidewall portion 3 can be reduced, the crack suppressing effect can be enhanced, and the steering stability is also enhanced. Like the conventional tire, the rubber hardness Hso of the outer rubber layer 12 is preferably in a range of 40 to 60°. If the rubber hardness Hso exceeds 60°, anti-crack performance is deteriorated, and if the rubber hardness Hso is less than 40°, anti-cut performance becomes insufficient. If the rubber hardness Hsi of the inner rubber layer 11 is excessively high, the riding comfort is deteriorated. Thus, it is preferable that the difference in rubber hardness (Hsi-Hso) is 10 degrees or less, more preferably 5 degrees or less. The rubber hardness Hsi and rubber hardness Hso means rubber hardness at the temperature of 25°C by durometer type A as measured based on JIS-K6253.

To stabilize the steering operation, it is also preferable to use short fiber-mixed rubber in which short fibers are mixed as the inner rubber layer 11. It is preferable that the short fibers are oriented in the circumferential direction of the tire. With this, the tire rigidity in the circumferential direction can be enhanced while suppressing the tire vertical rigidity to a low level. That is, it is possible to effectively enhance the twisting rigidity when the tire rotates, and to enhance the steering stability while suppressing the deterioration of riding comfort. Here, "oriented in the circumferential direction of the tire" means that 90% or more of the short fibers are oriented in an angle range of ±20° with respect to the circumferential direction of the tire.

Examples of materials of the short fibers are organic fibers such as nylon, polyester, aramid, rayon, vinylon, cotton, cellulosic resin, crystalline polybutadiene, or inorganic fibers such as metal fibers, whisker, boron and glass fiber. These materials may be used alone or in combination. The amount of short fibers to be mixed is preferably 3 to 30 phr. If the amount is less than 3 phr, the reinforcing effect can not sufficiently be exhibited, and if the amount exceeds 30 phr, anti-crack performance is deteriorated. It is preferable that the lower limit of the amount is 4 phr or higher, and more preferably 10 phr or higher, and the upper limit thereof is 25 phr, and more preferably 20 phr.

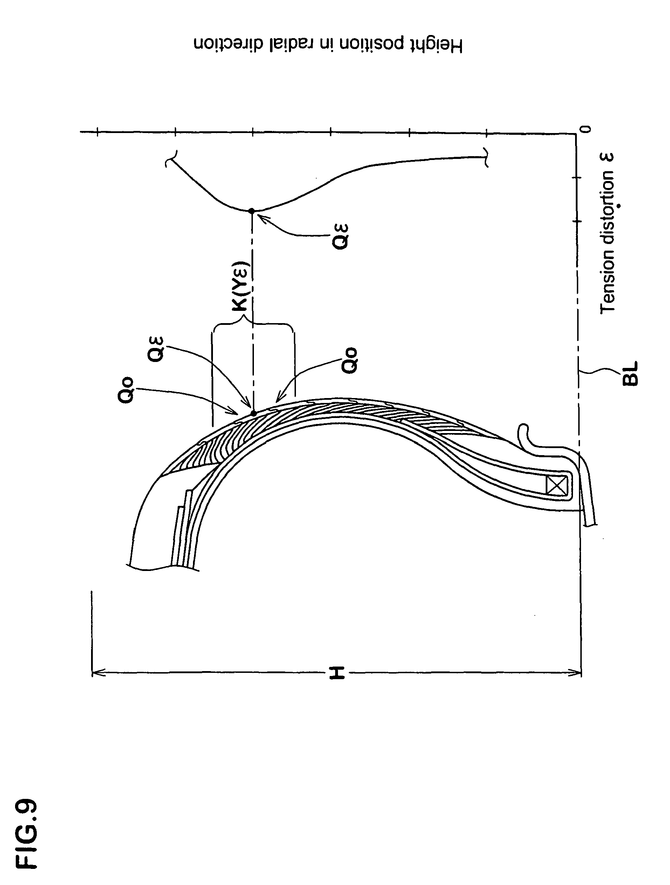

Next, there is a tendency that a crack in the sidewall outer surface 3S is prone to be generated as the tension distortion ε in the radial direction of the tire generated in the sidewall outer surface 3S when the tire is deformed is greater. Hence, in this example, when a maximum distortion position where the tension distortion ε (shown in Fig. 9) in the radial direction of the tire generated in the sidewall outer surface 3S becomes maximum when a normal load is applied is defined as Qε, the superposed width Wo of the outer rubber layer 12 is set to 10% or less of the strip width Wg in a region Yε having a width K of 20% of the tire cross section height H (shown in Fig. 1) centered around the maximum distortion position Qε.

This is because that, as indicated in Fig.9 by a tension distortion distribution obtained by measuring the tension distortion ε in the radial direction of the tire generated in the sidewall outer surface 3S when the normal load is applied while changing the height from a bead base line Bl, the maximum distortion position Qε is located in the vicinity of a buttress portion and the tension distortion ε is largely generated in the region Yε around the maximum distortion position Qε. Thus, at least in this region Yε, the crack can be suppressed more effectively by setting the superposed width Wo to 10% or less of the strip width Wg and by further reducing the number of exposed points Qo to be formed.

By the same reason, it is preferable to deviate the position of the exposed point Qo of the superposed portion So of the rubber strip P from the maximum distortion position Qε in the radial direction of the tire. With this, the crack can effectively be suppressed.

Here, the "when the normal load is applied" means that the tire is assembled to a normal rim, and normal internal pressure and normal load are applied. Further, the "normal rim" is a rim determined for each tire by a standard including one on which the tire is based, and the normal rim is a standard rim in the case of JATMA, a "Design Rim" in the case of TRA, and a "Measuring Rim" in the case of ETRTO. Further, "normal internal pressure" means an air pressure determined for each tire by a standard. The "normal internal pressure" is a maximum air pressure in JATMA, a maximum value described in "TIRE LOAD LIMITS AT VARIOUS COLD INFLATION PRESSURES" in the case of TRA, and "INFLATION PRESSURE" in the case of ETRTO. When the tire is for a passenger vehicle, the normal internal pressure is 180 kPa. Further, the "normal load" is a loaddefined in determined for each tire by the standard, and is maximum load ability in the case of JATMA, a maximum value described in "TIRE LOAD LIMITS AT VARIOUS COLD INFLATION PRESSURES", and a load obtained by multiplying "LOAD CAPACITY" by 0.88 in the case of ETRTO.

Although the especially preferable embodiment of the present invention has been explained in detail, the invention should not be limited to the illustrated embodiment, and the invention can variously be modified and carried out.

### Examples

Tires having the structure shown in Fig. 1 and having tire size of 195/55R15 were prototyped in accordance with specification shown in Table 1. Anti-crack performance, steering stability and riding comfort of the prototyped tires were evaluated. A superposed width of each of the rubber strips in the meridian cross section of the finished tire were measured at four points in the circumferential direction of the tire and its average values were obtained as the superposed widths Wi and Wo in Table.
(1) Anti-crack performance:
   The prototyped tires were left in a dry oven at 80°C for 12 days. Then, the tires were allowed to run on a drum at 50 km/h under the condition of rim (15x6JJ), internal pressure (200 kPa) and load (load of 150% of normal load), and running time until a crack was generated in an outer surface of a sidewall was evaluated with indices in which a comparative example 1 was set to 100. As the value is greater, the anti-crack performance is more excellent.
(2) Steering Stability, Riding Comfort:
   The prototyped tires were mounted to all wheels of a vehicle (1600cc, FF vehicle) under the condition of rim (15x6JJ) and internal pressure (200 kPa), the vehicle was allowed to run on a dry pavement test course, and the steering stability and the riding comfort are shown by a driver' s sensitive evaluation on a scale from 1 to 10 while setting the comparative example 1 as 6. As the index is higher, the result is more excellent.

**Table 1**

| | | Comparative Example 1 | Comparative Example 2 | Comparative Example 3 | Example 1 | Example 2 | Example 3 | Example 4 | Example 5 |
|---|---|---|---|---|---|---|---|---|---|
| Inner rubber layer | | | | | | | | | |
| • Rubber strip | | | | | | | | | |
| | •• Width Wg (mm) | 20 | 20 | 20 | 20 | 20 | 20 | 20 | 20 |
| | •• Thickness Tg (mm) | 1.0 | 1.0 | 1.0 | 1.0 | 1.0 | 1.0 | 1.0 | 1.0 |
| | •• Superposed width Wi (%) | 81 | 81 | 81 | 81 | 81 | 81 | 81 | 81 |
| | •• Winding direction (*1) | B → T | B → T | B → T | B → T | B → T | B → T | B → T | B → T |
| | •• Rubber hardness (degree) | 57 | 57 | 57 | 57 | 59 | 59 | 60 | 60 |
| | •• Presence or absence of short fibers | Absence | Absence | Absence | Absence | Absence | Absence | Presence (15 phr) | Presence (15 phr) |
| Outer rubber layer | | | | | | | | | |
| • Rubber strip | | | | | | | | | |
| | •• Width Wg (mm) | 20 | 20 | 20 | 20 | 20 | 20 | 20 | 20 |
| | •• Thickness Tg (mm) | 1.0 | 1.0 | 1.0 | 1.0 | 1.0 | 1.0 | 1.0 | 1.0 |
| | •• Superposed width Wi (%) | 81 | 32 | 11 | 11 | 11 | 11 | 11 | 11 |
| | •• Winding direction (*1) | B → T | B -> T | B → T | T → B | T → B | T → B | T → B | T → B |
| | •• Rubber hardness (degree) | 57 | 57 | 57 | 57 | 57 | 55 | 55 | 60 |
| | •• Presence or absence of short fibers | Absence | Absence | Absence | Absence | Absence | Absence | Absence | Presence (15 phr) |
| Anti-crack performance | | 100 | 105 | 139 | 163 | 165 | 178 | 175 | 152 |
| Steering stability | | 6 | 6 | 6 | 6 | 7 | 7 | 8 | 8 |
| Riding comfort | | 6 | 6 | 6 | 6 | 5.5 | 6 | 6 | 5 |

| | | | | | | | | | |
|---|---|---|---|---|---|---|---|---|---|
| ^{*1)} B → T means that rubber strip is wound from bead toward tread. T → B means that rubber strip is wound from tread toward bead. | | | | | | | | | |

It can be confirmed that in the case of the tire of the example in which the winding direction of the rubber strip is specified, the anti-crack performance is effectively enhanced. Especially when the rubber hardness Hsi of the inner rubber layer is set greater than rubber hardness Hso of the outer rubber layer, and when short fibers were mixed at least in the inner rubber layer, it can be confirmed that the steering stability can be enhanced while further enhancing the anti-crack performance.

## Claims

1. A pneumatic tire (1) comprising a carcass (6) extending from a tread portion (2) to a bead core (5) of a bead portion (4) through a sidewall portion (3), and
a sidewall rubber (3G) which is disposed outside of the carcass (6) and forms an outer surface (3S) of the sidewall portion (3), wherein the sidewall rubber (3G) is formed of a winding body (10) formed by winding a tape-like rubber strip (P) having strip width (Wg) of 5 to 50 mm and strip thickness (Tg) of 0.5 to 3.0 mm in a circumferential direction,
the winding body (10) comprises an inner rubber layer (11) and an outer rubber layer (12),
the inner rubber layer (11) is disposed on an inner side in an axial direction of the tire (1), the inner rubber layer (11) being formed by winding the rubber strip (P) spirally toward the tread from the bead while having a superposed portion of 30 to 90% of the strip width (Wg),
the outer rubber layer (12) covers the inner rubber layer (11) and forms an outer surface (3S) of the sidewall portion (3), the outer rubber layer (12) being formed by winding the rubber strip (P) spirally toward the bead from the tread while having a superposed portion of width (Wo) of 20% or less of the strip width (Wg), and rubber hardness (Hsi) of the inner rubber layer (11) is higher than rubber hardness (Hso) of the outer rubber layer (12).

2. The pneumatic tire according to claim 1, wherein the inner rubber layer (11) comprises short fiber-mixed rubber in which short fibers are mixed.

3. The pneumatic tire according to claim 2, wherein the short fibers are oriented in the circumferential direction of the tire (1).

4. The pneumatic tire according to any one of claims 1 to 3, wherein a position of an exposed point (Qo) of the superposed portion (So) of the rubber strip in the outer rubber layer (12) is deviated in a radial direction of the tire from a maximum distortion position (Qε) where a tension distortion ε in the radial direction of the tire (1) generated in the outer surface (3S) of the sidewall portion (3) becomes maximum in a state in which the tire is assembled to a normal rim, and a normal internal pressure and a normal load are applied to the tire.

5. The pneumatic tire according to any one of claims 1 to 4, wherein the superposed width (Wo) of the rubber strip in the outer rubber layer (12) is 10% or less of the strip width (Wg) in a region (Yε) having a width (K) of 20% of a cross section height (H) of the tire, the region (Yε) being centered on the maximum distortion position (Qε).

## Patentansprüche

1. Luftreifen (1), umfassend eine Karkasse (6), die sich von einem Laufflächenabschnitt (2) zu einem Wulstkern (5) eines Wulstabschnitts (4) durch einen Seitenwandabschnitt (3) erstreckt, und einen Seitenwandgummi (3G), der außerhalb der Karkasse (6) angeordnet ist und eine Außenfläche (3S) des Seitenwandabschnitts (3) bildet, wobei der Seitenwandgummi (3G) aus einem Wickelkörper (10) gebildet ist, der durch Wickeln eines bandartigen Kautschukstreifens (P) mit einer Streifenbreite (Wg) von 5 bis 50 mm und einer Streifendicke (Tg) von 0,5 bis 3,0 mm in einer Umfangsrichtung gebildet ist,
wobei der Wickelkörper (10) eine innere Gummischicht (11) und eine äußere Gummischicht (12) umfasst,
wobei die innere Gummischicht (11) an einer Innenseite in einer axialen Richtung des Reifens (1) angeordnet ist, wobei die innere Gummischicht (11) durch spiralförmiges Wickeln des Kautschukstreifens (P) von dem Wulst aus zu der Lauffläche hin gebildet ist, während ein überlagerter Abschnitt von 30 bis 90 % der Streifenbreite (Wg) vorgesehen ist,
wobei die äußere Gummischicht (12) die innere Gummischicht (11) bedeckt und eine Außenfläche (3S) des Seitenwandabschnitts (3) bildet, wobei die äußere Gummischicht (12) durch spiralförmiges Wickeln des Kautschukstreifens (P) von der Lauffläche aus zu dem Wulst hin gebildet ist, während ein überlagerter Abschnitt mit einer Breite (Wo) von 20 % oder weniger der Streifenbreite (Wg) vorgesehen ist, und
eine Gummihärte (Hsi) der inneren Gummischicht (11) höher als eine Gummihärte (Hso) der äußeren Gummischicht (12) ist.

2. Luftreifen nach Anspruch 1,
wobei die innere Gummischicht (11) mit Kurzfaser gemischten Kautschuk umfasst, in welchem Kurzfasern gemischt sind.

3. Luftreifen nach Anspruch 2,
wobei die Kurzfasern in der Umfangsrichtung des Reifens (1) orientiert sind.

4. Luftreifen nach einem der Ansprüche 1 bis 3,
wobei eine Position eines freigelegten Punkts (Qo) des überlagerten Abschnitts (So) des Kautschukstreifens in der äußeren Gummischicht (12) in einer radialen Richtung des Reifens von einer Position maximaler Verzerrung (Qε) abweicht, wo eine in der Außenfläche (3S) des Seitenwandabschnitts (3) erzeugte Spannungsverzerrung (ε) in der radialen Richtung des Reifens (1) in einem Zustand maximal wird, in welchem der Reifen auf eine normale Felge aufgezogen ist und ein normaler Innendruck und eine normale Last auf den Reifen aufgebracht sind.

5. Luftreifen nach einem der Ansprüche 1 bis 4,
wobei die überlagerte Breite (Wo) des Kautschukstreifens in der äu-βeren Gummischicht (12) 10 % oder weniger der Streifenbreite (Wg) in einem Bereich (Yε) beträgt, der eine Breite (K) von 20 % einer Querschnittshöhe (H) des Reifens aufweist, wobei der Bereich (Yε) auf der Position maximaler Verzerrung (Qε) zentriert ist.

## Revendications

1. Pneu (1) comprenant une carcasse (6) s'étendant à partir d'une partie de bande de roulement (2) jusqu'à une tringle (5) d'une partie de talon (4) à travers une partie de paroi latérale (3), et
un caoutchouc de paroi latérale (3G) qui est disposé à l'extérieur de la carcasse (6) et forme une surface externe (3S) de la partie de paroi latérale (3), dans lequel le caoutchouc de paroi latérale (3G) est formé avec un corps d'enroulement (10) formé en enroulant une bande de caoutchouc en forme de ruban (P) ayant une largeur de bande (Wg) de l'ordre de 5 à 50 mm et une épaisseur de bande (Tg) de l'ordre de 0,5 à 3,0 mm dans une direction circonférentielle,
le corps d'enroulement (10) comprend une couche de caoutchouc interne (11) et une couche de caoutchouc externe (12),
la couche de caoutchouc interne (11) est disposée sur un côté interne dans une direction axiale du pneu (1), la couche de caoutchouc interne (11) étant formée en enroulant la bande de caoutchouc (P) en spirale vers la bande de roulement à partir du talon, tout en ayant une partie superposée de l'ordre de 30 à 90 % de la largeur de bande (Wg),
la couche de caoutchouc externe (12) recouvre la couche de caoutchouc interne (11) et forme une surface externe (3S) de la partie de paroi latérale (3), la couche de caoutchouc externe (12) étant formée en enroulant la bande de caoutchouc (P) en spirale vers le talon à partir de la bande de roulement tout en ayant une partie superposée de largeur (Wo) de 20 % ou moins de la largeur de bande (Wg), et
la dureté de caoutchouc (Hsi) de la couche de caoutchouc interne (11) est supérieure à la dureté de caoutchouc (Hso) de la couche de caoutchouc externe (12).

2. Pneu selon la revendication 1, dans lequel la couche de caoutchouc interne (11) comprend un caoutchouc mélangé avec des fibres courtes dans lequel les fibres courtes sont mélangées.

3. Pneu selon la revendication 2, dans lequel les fibres courtes sont orientées dans la direction circonférentielle du pneu (1).

4. Pneu selon l'une quelconque des revendications 1 à 3, dans lequel une position d'un point exposé (Qo) de la partie superposée (So) de la bande de caoutchouc dans la couche de caoutchouc externe (12) est déviée dans la direction radiale du pneu à partir d'une position de déformation maximum (Qε) où une déformation de tension (ε) dans la direction radiale du pneu (1) générée dans la surface externe (3S) de la partie de paroi latérale (3) devient maximum dans un état dans lequel le pneu est assemblé sur une jante normale, et qu'une pression interne normale et une charge normale sont appliquées sur le pneu.

5. Pneu selon l'une quelconque des revendications 1 à 4, dans lequel la largeur superposée (Wo) de la bande de caoutchouc dans la couche de caoutchouc externe (12) est de 10 % ou moins de la largeur de bande (Wg) dans une région (Yε) ayant une largeur (K) de 20 % d'une hauteur transversale (H) du pneu, la région (Yε) étant centrée sur la position de déformation maximum (Qε).
